# EUROPÄISCHE PATENTSCHRIFT

(11) **EP 0 686 655 B1**
(45) Veröffentlichungstag und Bekanntmachung des Hinweises auf die Patenterteilung: **13.01.1999**
(21) Anmeldenummer: 95108168.6
(22) Anmeldetag: 29.05.1995
(51) Int. Cl.: C08G 18/72, C08G 18/77, C08G 18/79, C08G 18/10, C09J 175/00

(54) **Vernetzer für polymere Klebstoffe**
Crosslinker for polymeric adhesives
Agent de réticulation pour des adhésifs polymériques

(30) Priorität: 10.06.1994 DE 4420306
(43) Veröffentlichungstag der Anmeldung: 13.12.1995
(73) Patentinhaber: BAYER AG, 51368 Leverkusen (DE)
(72) Erfinder: Hombach, Rudolf, Dr., D-51375 Leverkusen (DE); Ganster, Otto, Dr., D-51519 Odenthal (DE); Arend, Günter, Dr., D-41540 Dormagen (DE)

(56) Entgegenhaltungen:
- EP-A- 0 499 113
- FR-A- 1 350 900

## Beschreibung

Die vorliegende Erfindung betrifft Vernetzerisocyanate für polymere Klebstoffe.

Als vernetzende Zusatzmittel für vorzugsweise lösemittelhaltige Klebstoffe auf Basis von Natur- oder synthetischen Polymeren sind eine Reihe tri- bzw. höherfunktioneller Polyisocyanate bekannt, z.B.

4,4',4"-Triisocyanato-triphenylmethan, Isocyanatoarylphosphorsäure- bzw. -thio-phosphorsäure-Derivate laut DE-PS 1 311 001 (z.B. Thiophosphorsäure-tris(p-isocyanatophenylester)), substituierte Diphenylmethantetraisocyanate gemäß DE-PS 1 812 565 oder NCO-terminierte Umsetzungsprodukte des 2,4-Toluylendiisocyanats mit Trimethylolpropan. Ebenfalls auf 2,4-Toluylendiisocyanate basierende Vernetzerisocyanate sind Isocyanatgruppen-aufweisende Trimerisate, wie sie z.B. in DE-PS 26 41 380 beschrieben werden.

Die Verwendung der genannten Polyisocyanate als vernetzende Zusatzmittel erhöht insbesondere die Wärmebeständigkeit der Klebeverbindung.

Für die Verklebung unter Spannung stehender Substrate, z.B. bei der Verklebung von Schuhsohlen an stark gewölbte Oberteile, ist zum Auffangen der elastischen Rückstellkräfte ein Klebefilm mit möglichst hoher Sofortfestigkeit erforderlich.

Einige dieser Polyisocyanate - z.B Thiophosphorsäure-tris-(p-isocyanatophenylester) bzw. Triisocyanatomonoisocyanurate nach DE-PS 26 41 380 - ergeben schon recht gute Sofortfertigkeitswerte, aber eine weitere Steigerung dieser Eigenschaft würde erhebliche technische Vorteile bringen, weil sie eine Beschleunigung der Arbeitszyklen erlaubt.

Aus DE 4 104 436 sind Mischungen von Trimerisaten des 2,4-Toluylendiisocyanats mit Triisocyanatotriphenylmethan als Vernetzerisocyanate für polymere Klebstoffe bekannt. Diese, die genannten Mischungen enthaltenden Klebstoffe, besitzen sehr gute Klebeeigenschaften, insbesondere in der Wärme. Sie eignen sich jedoch nur für die Verklebung von dunklen Materialien, da die genannten Mischungen bereits dunkel gefärbt sind und sich noch weiter verfärben in Gegenwart von Licht.

Gegenstand der vorliegenden Erfindung sind Mischungen von Trimerisaten des 2,4-Toluylendiisocyanats mit Thiophosphorsäure-tris-(p-isocyanatophenylester) als Vernetzerisocyanate für polymere Klebstoffe, die überraschender Weise gegenüber den ohnehin schon sehr wirksamen Einzelbestandteilen sowohl eine verbesserte Sofort- und Endfestigkeit im Schälversuch als auch eine Verbesserung der Festigkeit der Klebung bei Messung in der Wärme zeigen. Neben den sehr guten Klebeeigenschaften, die mit den erfindungsgemäßen Mischungen erzielt werden, eignen sich Klebstoffe die die erfindungsgemäßen Mischungen enthalten, insbesondere zum Verkleben von hellen Werkstoffen.

Dabei können als Thiophosphorsäure-tris-(p-isocyanatophenylester) handelsübliche Produkte verwendet werden (z.B. Lösungen in Ethylacetat). Als Trimerisationsprodukt des 2,4-Toluylendiisocyanats werden Produkte verwendet, welche einen Gehalt von mehr als 50 Gew.-%, an Trisisocyanato-Monoisocyanurat besitzen und nicht mehr als 3 Gew.-%, bevorzugt weniger als 0,5 Gew.-% freies monomeres Toluylendiisocyanat enthalten sollen, wie sie in DE-PS 26 41 380 beschrieben sind.

In den erfindungsgemäßen Mischungen werden Thiophosphorsäure-tris-(p-isocyanatophenylester) (A) und das Trimerisationsprodukt (B) im Bereich der Gewichtsverhältnisse A:B = 2,5:1 bis 0,75:1, vorzugsweise A:B = 1,5:1 bis 1:1 eingesetzt.

Die erfindungsgemäße Verwendung der Isocyanatmischungen richtet sich auf die Vernetzung von polymeren Klebstoffen, insbesondere solchen auf Basis von Natur- und Synthesekautschuk. Vorzugsweise handelt es sich um lösemittelhaltige Klebstoffe.

Beispiele für geeignete Synthesekautschuk-Typen sind Polymerisate von Dienen wie Butadien oder Mischpolymerisate von Dienen wie Butadien mit einfach olefinisch ungesättigten Verbindungen wie z.B. Styrol, Acrylnitril, Methacrylnitril oder anderen Vinylderivaten, Polyhydroxypolyether oder Polyhydroxypolyester oder daraus hergestellte Polyurethane oder Polymerisate bzw. Mischpolymerisate des 2-Chlorbutadien-1,3 mit anderen polymerisierbaren olefinisch ungesättigten Monomeren. Bevorzugte Polymere für die Klebstoffe sind z.B. in toluolischer Lösung mit Methacrylsäureestern gepfropfte Polymerisate des 2-Chlorbutadiens bzw. lineare oder weitgehend lineare Hydroxylpolyurethane, die aus Estern aus aliphatischen oder aromatischen Dicarbonsäuren mit Alkandiolen bzw. Lactonen, insbesondere Caprolacton, und aromatischen oder aliphatischen Diisocyanaten, insbesondere Diisocyanatotoluolen, 4,4'-Diisocyanatodiphenylmethan oder Hexamethylendiisocyanat hergestellt worden sind.

Je nach Basis-Polymer kommen für diese Klebstoffe als Lösemittel u.a. aliphatische Kohlenwasserstoffe, z.B. Benzin, aromatische Kohlenwasserstoffe, z.B. Toluol, Chlorkohlenwasserstofe, z.B. Methylenchlorid, Trichlorethylen, Ester, wie z.B. Ethylacetat, Ketone wie z.B. Aceton, Methylethylketon oder Gemische dieser Lösemittel in Betracht. Zur Modifizierung ihrer klebtechnischen Eigenschaften können die Klebstoffe neben den polymeren Bindemitteln, z.B. zur Erzielung einer besonders lange andauernden Kontaktklebrigkeit oder zur Erhöhung der Kohäsionsfestigkeit noch weitere Stoffe z.B. Naturharze, modifizierte Naturharze (z.B. Kollophoniumester), oder synthetische Harze (z.B. Phthalatharze) oder auch andere Polymere wie z.B. Chlorkautschuk oder lösliche Polymerisate oder Mischpolymerisate des Vinylacetats oder anderer Vinylverbindungen enthalten.

Bei der erfindungsgemäßen Verwendung der Isocyanatmischungen kommen diese vorzugsweise mit 6 bis 20 Gewichtsteilen und 100 Gewichtsteile Klebstoffpolymer zum Einsatz. Um eine schnelle und homogene Verteilung zu gewährleisten ist es zweckmäßig, die erfindungsgemäßen Isocyanatmischungen zu 10 bis 50 Gew.-% in geeigneten Lösemitteln gelöst den Klebstoffpolymeren zuzusetzen, welche ihrerseits im allgemeinen als 10 bis 30 %ige Lösungen zur Anwendung kommen. Geeignete Lösemittel sind z.B. Dichlormethan, Ethylacetat.

Die mit den erfindungsgemäßen Isocyanatmischungen vernetzten Klebstoffe eignen sich zum Kleben beliebiger Werkstoffe, insbesonderer heller Werkstoffe gleicher oder verschiedener Art, z.B. Leder, Textilien, Kunststoffen, Metallen oder Holz, vorzugsweise von Weich-Polyvinylchlorid-Materialien und Gummi.

Der Gegenstand der vorliegenden Erfindung soll anhand der folgenden Beispiele noch näher erläutert werden.

### Beispiele

### 1. Herstellung von Isocyanatlösungen

### Isocyanat A

Thiophosphorsäure-tris-(p-isocyanato-phenylester) mit einem NCO-Gehalt von 26,6 %.

### Isocyanat B

Trimerisationsprodukt von 2,4-Toluylendiisocyanat mit einem Gehalt an Triisocyanato-monoisocyanurat von ca. 60 % nach DE-PS 2 641 380 und einem Isocyanatgehalt von 20 %.

Die aus den Polyisocyanaten A und B hergestellten Mischungen werden mit Ethylacetat auf einen Isocyanatgehalt von 7,1 % eingestellt:

| **Isocyanat-Mischung** | **Isocyanat A Gew.-%** | **Isocyanat B Gew.-%** | **Ethylacetat Gew.-%** |
|---|---|---|---|
| 1,1 | 27 | - | 73 |
| 1,2 | 20,2 | 8,8 | 71 |
| 1,3 | 17,5 | 12,3 | 71,2 |
| 1,4 | 13,5 | 17,5 | 69,5 |
| 1,5 | - | 35 | 65,5 |

### 2. Klebstoffe

### Klebstoff 2.1

Handelsüblicher Klebstoff auf Basis eines 2-Chlor-Butadien-(1,3)-Polymerisates, das durch Aufpfropfung von Methylmethacrylat modifiziert wurde.
- Hersteller:: Goodbon 600 Adhesive
Orgavyl Chemical Industries SDN,BHD,
Jalan Kelang Lama
58200 Kuala Lumpur
Malaysia
- Feststoffgehalt: ca. 23 %
- Lösungsmittel:: Toluol

Derartige Klebestoffe sind nach folgender Basisrezeptur aufgebaut:

| | |
|---|---|
| 15 Gew.- Tle. | 2-Chlorbutadien-(1,3)-Polymerisat, gepfropft mit 7 Gew.-Tln. Methylacrylsäuremethylester |
| 5 Gew.-Tle. | Terpenphenolharz |
| 73 Gew.-Tle. | Toluol. |

Die Pfropfung erfolgt nach üblichen Methoden, wie z.B. in der von der Bayer AG, Leverkusen, herausgegebenen Informationsschrift "Grafting of Baypren 320 P with Methyl-Methacrylate", Verfasser: Dr. H.W. Lucas und Dr. G. Hohmann, Sept. 1989.

Mit Klebstoff 2.1. wurde durch sorgfältiges Vermischen mit den unter 1. aufgeführten Polyisocyanatlösungen die folgenden Reaktions-Mischugen hergestellt:

| **Reaktions-Mischung** | **Klebstoff 2.1** | **Isocyanatlösungen** |
|---|---|---|
| 2.1.1 | 100 G.T. | 3 G.T 1.1 |
| 2.1.2 | 100 G.T. | 3 G.T 1.2 |
| 2.1.3 | 100 G.T. | 3 G.T 1.3 |
| 2.1.4 | 100 G.T. | 3 G.T 1.4 |
| 2.1.5 | 100 G.T. | 3 G.T 1.5 |

### Klebstoff 2.2

Ein im wesentlichen lineares, Hydroxylgruppen-aufweisendes Polyurethan mit einem gelchromatographisch ermittelten Molekulargewicht von etwa 100 000, aus 2,4-Toluylendiisocyanat und einem Hydroxylgruppen-haltigen Polyester aus Adipinsäure und Ethylenglykol wurde in Methylethylketon zu einer etwa 20 %igen Lösung mit einer Viskosität von 2 Pas.s bei 20°C gelöst.

Mit Klebstoff 2.2 wurden durch sorgfältiges Vermischen mit den unter 1. aufgeführten Polyisocyanat-Lösungen die folgenden Reaktionsmischungen hergestellt:

| **Reaktions-Mischung** | **Klebstoff 2.2** | **Isocyanatlösungen** |
|---|---|---|
| 2.2.1 | 100 G.T. | 3 G.T 1.1 |
| 2.2.2 | 100 G.T. | 3 G.T 1.2 |
| 2.2.3 | 100 G.T. | 3 G.T 1.3 |
| 2.2.4 | 100 G.T. | 3 G.T 1.4 |
| 2.2.5 | 100 G.T. | 3 G.T 1.5 |

### 3. Testmaterialien

Die Prüfung der Klebstoffe erfolgte auf Nora-Testgummi (SBR), einem Testmaterial, das einem üblichen Sohlenmaterial entspricht.

Nora-Testgummi (SBR) ist ein Prüfsubstrat des PFI (Prüf- und Forschungsinstitut für die Schuhindustrie, Pirmasens), Hersteller: Firma Karl Freudenberg, Weinheim, BRD.

### 4. Meßergebnisse der Klebung

Zur Prüfung der Klebstoffe werden aus den Testmaterialien nach DIN 53273 Prüfkörper hergestellt. Vor dem Aufbringen des Klebstoffes wurde das Gummimaterial mit Schleifpapier der Körnung 40 gründlich gerauht. Der Klebstoffauftrag erfolgte beidseitig zweimal, nach einer Zwischentrocknung von 15 Minuten, sodaß auf jeder Seite ein Klebefilm von 50 g/m² Feststoff vorlagen.

Die mit dem Klebstoff 2.1 durchgeführten Klebungen erfolgen nach einer Trockenzeit des letzten Klebstoffauftrages von 30 Minuten im Normalklima nach dem Kontaktklebeverfahren, d.h. ohne vorherige Erwärmung.

Die mit dem Klebstoff 2.2 durchgeführten Klebungen werden mit in gleicher Weise 30 Minuten in Normalklima-getrockneten Prüfstreifen durchgeführt, aber im Wärmeaktivierverfahren, d.h. nach Erwärmen der Klebfilme auf 80 ± 5°C.

Je 2 der wie gerade beschriebenen vorbereiteten Prüfstreifen werden mit den Klebschichten zusammengelegt und mit einem Druck von 0,35 N/mm² verpreßt.

Nach dem Kleben wurden die Prüfkörper sofort und nach 9-tägiger Lagerung bei 23°C geprüft, Der im Trennversuch von einem Spindelvorschub von 100 mm/min nach DIN 53273 bei 23°C ermittelte Schälwiderstand ist in folgender Tabelle aufgeführt:

### 4.1 Schälwiderstand bei Raumtemperatur (23°C)

| | | Schälwiderstand N/mm | |
|---|---|---|---|
| Beispiel | Klebstoff Reaktionsmischung | sofort | 9 Tage |
| 1 * | 2.1.1 | 1,9 | 5,2 |
| 2 | 2.1.2 | 3,4 | 7,1 |
| 3 | 2.1.3 | 3,1 | 7,3 |
| 4 | 2.1.4 | 3,1 | 6,8 |
| 5 * | 2.1.5 | 2,5 | 4,7 |

| | | | |
|---|---|---|---|
| *: Vergleichsbeispiele mit den jeweils reinen Isocyanaten A bzw. B. | | | |

Die Beispiele 2 bis 4 beziehen sich auf erfindungsgemäße Mischungen der Isocyanaten A und B.

### 4.2 Schälwiderstand von frischen Klebungen bei 50°C

Zur Bestimmung der Wärmefestigkeit der frischen Klebungen wurde ein Schälversuch durchgeführt. Hierzu wurden die frisch verklebten Nora-Gummi-Prüfkörper sofort nach ihrer Herstellung 1 h bei 50°C getempert. Der Schälwiderstand wurde dann sofort an den noch 50°C warmen Prüfkörpern ermittelt. Die Ergebnisse finden sich in der folgenden Tabelle:

| **Beispiel** | **Klebstoff Reaktionsmischung** | **Schälwiderstand [N/m]** |
|---|---|---|
| 6 * | 2.1.1 | 2,5 |
| 7 | 2.1.2 | 2,9 |
| 8 | 2.1.3 | 2,8 |
| 9 | 2.1.4 | 2,5 |
| 10 * | 2.1.5 | 1,1 |
| 11 * | 2.2.1 | 2,4 |
| 12 | 2.2.2 | 2,7 |
| 13 | 2.2.3 | 3,4 |
| 14 | 2.2.4 | 2,2 |
| 15* | 2.2.5 | 0,4 |

| | | |
|---|---|---|
| *: Vergleichsbeispiele mit den jeweils reinen Isocyanaten A bzw. B | | |

Die Beispiele 7 bis 9 und 12 bis 14 sind erfindungsgemäße Beispiele mit den Mischungen der Isocyanate A und B.

## Patentansprüche

1. Vernetzerisocyanate für polymere Klebstoffe, dadurch gekennzeichnet, daß Mischungen aus
A) Thiophosphorsäure-tris(p-isocyanatophenylester)
und
B) Trimerisationsprodukten des 2,4-Toluylendiisocyanats mit einem Gehalt an Trisisocyanato-monoisocyanurat von mindestens 50 Gew.-% und einem Gehalt an freiem Toluylendiisocyanat von weniger als 3 Gew.-%
eingesetzt werden.

2. Vernetzerisocyanat-Mischung nach Anspruch 1, dadurch gekennzeichnet, daß die Isocyanate A und B im Mischungsverhältnis A:B = 2,5:1 bis 0,75:1, vorzugsweise im Verhältnis A:B = 1,5:1 bis 1:1 in inerten Lösungsmitteln gelöst eingesetzt werden.

3. Verwendung der Vernetzerisocyanat-Mischungen nach Anspruch 1 zur Vernetzung von Klebstoffen, dadurch gekennzeichnet, daß in Lösung, bezogen auf 100 Gew.-Teile des Klebstoffpolymers, 2 bis 25 Gew.-Teile, vorzugsweise 3 bis 10 Gew.-Teile der Vernetzerisocyanatmischungen zum Einsatz kommen.

4. Verwendung der Vernetzerisocyanatmischungen nach Anspruch 3, dadurch gekennzeichnet, daß die eingesetzten Klebstoffpolymere Natur- und Synthesekautschuke, vorzugsweise Hydroxypolyurethane oder Methacrylsäuremethylester-gepfropfte Polychloroprene sind.

5. Verwendung der Mischungen aus Klebstoff- und Vernetzerisocyanat-Lösungen zum Verbinden von Teilen aus Gummi, Leder, Kunststoffen und Metallen.

## Claims

1. Crosslinking isocyanates for polymeric adhesives, characterised in that mixtures of
A) thiophosphoric acid tris(p-isocyanatophenyl ester)
and
B) trimerisation products of 2,4-tolylene diisocyanate having a trisisocyanato monoisocyanurate content of at least 50 wt.% and a free tolylene diisocyanate content of less than 3 wt.%
are used.

2. Crosslinking isocyanate mixture according to claim 1, characterised in that isocyanates A and B are used dissolved in inert solvents in a mixture ratio of A:B = 2.5:1 to 0.75:1, preferably in a ratio of A:B = 1.5:1 to 1:1.

3. Use of the crosslinking isocyanate mixtures according to claim 1 for crosslinking adhesives, characterised in that, related to 100 parts by weight of the adhesive polymer, 2 to 25 parts by weight, preferably 3 to 10 parts by weight of the crosslinking isocyanate mixtures are used in solution.

4. Use of the crosslinking isocyanate mixtures according to claim 3, characterised in that the adhesive polymers used are natural and synthetic rubbers, preferably hydroxypolyurethanes or methyl methacrylate grafted polychloroprenes.

5. Use of the mixtures of adhesive solution and crosslinking isocyanate solution to bond parts made from rubber, leather, plastics and metal.

## Revendications

1. Isocyanates de réticulation pour des adhésifs polymères, caractérisés en ce que l'on utilise des mélanges constitués
A) de tris(ester p-isocyanatophénylique) d'acide thiophosphorique
et
B) de produits de trimérisation du diisocyanate de 2,4-toluylène avec une teneur en trisisocyanato-monoisocyanurate d'au moins 50 % en poids et une teneur en diisocyanate de toluylène libre inférieure à 3 % en poids.

2. Mélange d'isocyanates de réticulation selon la revendication 1, caractérisé en ce que l'on utilise les isocyanates A et B avec un rapport de mélange A:B = 2,5:1 à 0,75:1, de préférence avec un rapport A:B = 1,5:1 à 1:1 dissous dans des solvants inertes.

3. Utilisation des mélanges d'isocyanates de réticulation selon la revendication 1 pour la réticulation d'adhésifs, caractérisée en ce que l'on utilise de 2 à 25 parties en poids, de préférence de 3 à 10 parties en poids des mélanges d'isocyanates de réticulation, rapportées à 100 parties en poids du polymère adhésif.

4. Utilisation des mélanges d'isocyanates de réticulation selon la revendication 3, caractérisée en ce que les polymères adhésifs utilisés sont des caoutchoucs naturels et de synthèse, de préférence des hydroxypolyuréthannes ou des polychloroprènes greffés avec de l'ester méthylique d'acide méthacrylique.

5. Utilisation des mélanges constitués de solutions d'adhésifs et d'isocyanates de réticulation pour lier des pièces constituées de caoutchouc, de cuir, de matières plastiques et de métaux.
